# EUROPEAN PATENT SPECIFICATION

(11) **EP 1 111 587 B1**
(45) Date of publication and mention of the grant of the patent: **25.01.2006**
(21) Application number: 00403169.6
(22) Date of filing: 14.11.2000
(51) Int. Cl.: G10L 15/18

(54) **Speech recognition device implementing a syntactic permutation rule**
Vorrichtung zum Spracherkennung mit Durchführung einer syntaktischen Permutationsregel
Dispositif de reconnaissance vocale mettant en oeuvre une règle syntaxique de permutation

(30) Priority: 30.11.1999 FR 9915083
(43) Date of publication of application: 27.06.2001
(73) Proprietor: THOMSON multimedia, 92100 Boulogne Billancourt (FR)
(72) Inventor: Soufflet, Frédéric, Thomson Multimedia, 92100 Boulogne-Billancourt (FR); Delaunay, Christophe, Thomson Multimedia, 92100 Boulogne-Billancourt (FR)
(74) Representative: Ruellan-Lemonnier, Brigitte

(56) References cited:
- US-A- 5 799 065
- US-A- 5 937 385
- VILLADSEN J: "Combinatory categorial grammar for intensional fragment of natural language" SCANDINAVIAN CONFERENCE ON ARTIFICIAL INTELLIGENCE - 91. 'ODIN'S RAVENS'. PROCEEDINGS OF THE SCAI '91, ROSKILDE, DENMARK, 21-24 MAY 1991, pages 328-339, XP000933892 1991, Amsterdam, Netherlands, IOS, Netherlands
- KANDULSKI M: "On commutative and nonassociative syntactic calculi and categorical grammars" , MATHEMATICAL LOGIC QUARTERLY, 1995, GERMANY, VOL. 41, NR. 2, PAGE(S) 217 - 235 XP000933812 ISSN: 0942-5616 * page 219, paragraph 2 * * page 231, last paragraph *

## Description

Information systems or control systems are making ever-increasing use of a voice interface to make interaction with the user fast and intuitive. Since these systems are becoming more complex, the dialogue styles supported are becoming ever more rich, and one is entering the field of very large vocabulary continuous speech recognition.

It is known that the design of a large vocabulary continuous speech recognition system requires the production of a Language Model which defines the probability that a given word from the vocabulary of the application, follows another word or group of words, in the chronological order of the sentence.

This language model must reproduce the speaking style ordinarily employed by a user of the system.

The quality of the language model used greatly influences the reliability of the speech recognition. This quality is most often measured by an index referred to as the perplexity of the language model, and which schematically represents the number of choices which the system must make for each decoded word. The lower this perplexity, the better the quality.

The language model is necessary to translate the voice signal into a textual string of words, a step often used by dialogue systems. It is then necessary to construct a comprehension logic which makes it possible to comprehend the query so as to reply to it.

There are two standard methods for producing large vocabulary language models:
(1) the so-called N-gram statistical method, most often employing a bigram or trigram, consists in assuming that the probability of occurrence of a word in the sentence depends solely on the N words which precede it, independently of its context in the sentence.
   If one takes the example of the trigram for a vocabulary of 1000 words, it would be necessary to define 1000³ probabilities to define the language model, this being rather impractical. To solve this problem, the words are grouped into sets which are either defined explicitly by the model designer, or deduced by self-organising methods.
   This language model is constructed from a text corpus automatically.
(2) The second method consists in describing the syntax by means of a probabilistic grammar, typically a context-free grammar defined by virtue of a set of rules described in the so-called Backus Naur Form or BNF form.

The rules describing grammars are most often handwritten, but may also be deduced automatically. In this regard, reference may be made to the following document:
"Basic methods of probabilistic context-free grammars" by F. Jelinek, J.D. Lafferty and R.L. Mercer NATO ASI Series Vol. 75 pp. 345-359, 1992.

The models described above raise specific problems when they are applied to interfaces of natural language systems:

The N-gram type language models (1) do not correctly model the dependencies between several distant grammatical substructures in the sentence. For a syntactically correct uttered sentence, there is nothing to guarantee that these substructures will be complied with in the course of recognition, and therefore it is difficult to determine whether such and such a sense, customarily borne by one or more specific syntactic structures, is conveyed by the sentence.

These models are suitable for continuous dictation, but their application in dialogue systems suffers from the defects mentioned.

The models based on grammars (2) make it possible to correctly model the remote dependencies in a sentence, and also to comply with specific syntactic substructures. The perplexity of the language obtained is often lower, for a given application, than the N-gram type models.

On the other hand, for highly inflected languages such as French or Italian, in which the position of the syntactic groups in the sentence is fairly free, the BNF type grammars raise problems in defining the permutations of the syntactic groups in question.

For less inflected languages such as English, these permutations are also necessary for describing the hesitations and the false starts of ordinary spoken language, and make the language model based on BNFs rather unsuitable.

The document US 5,937,385 discloses an automated system generates syntaxic grammars for speech recognition. The generation comprises two times. In a first time, the grammar is introduced and executed for producing all the possible phrases. In a second time, an operator checks each phrase for classing in two groups : the understandable phrases and the non-understandable phrases. The system leaves out all the non-understandable phrases and modifies the grammar for keeping only the understandable phrases. Therefore, all the permutations are unfurled. This system is not really suitable for processing hesitations and the false starts of ordinary spoken language."

The document VILLADSEN "Combinatory categorial grammar for intensional fragment of natural language" discloses a processor of natural language based on a categorial grammar which translates a sentence into a logic formula. The used operators allow interpreting a phrase correct-assumed, thus according to exhaustive rules. This processor is not suitable for processing oral sentences that contains hesitations.

The document JUNQUA (US 5,799,065) discloses a phone apparatus equipped with a speech recognition system. The apparatus is able to recognize a name among a list of names recorded in its memory and to associate this name and a phone number. Junqua does not use a syntaxical grammar but a stochastic grammar. This system is very suitable for the speech recognition of limited number of words, such as in a phone diary, but not for processing oral sentences with hesitations and false starts.

The subject of the invention as claimed in claim 1, is a speech recognition device including an audio processor for the acquisition of an audio signal and a linguistic decoder for determining a sequence of words corresponding to the audio signal.

The language model proposed by the inventors extends the formalism of BNF grammars so as to support the syntactic permutations of ordinary language and of highly inflected languages. It makes it possible to reduce the memory required for the speech recognition processing and is particularly suitable for uses in mass-market products.

According to a preferred embodiment, the syntactic rule for permuting symbols includes a list of symbols and as appropriate expressions of constraints on the order of the symbols.

According to a preferred embodiment, the linguistic decoder includes a recognition engine which, upon the assigning of symbols of a permutation to a string of terms of a sentence, chooses a symbol to be assigned to a given term solely from among the symbols of the permutation which have not previously been assigned.

According to a particular embodiment, the recognition engine implements an algorithm of the "beam search" or "n-best" type.

Other algorithms may also be implemented.

Other characteristics and advantages of the invention will become apparent through the description of a particular non-limiting embodiment, explained with the aid of the appended drawings in which:
- Figure 1 is a diagram of a speech recognition system,
- Figure 2 is a diagram of a prior art stack-based automaton,
- Figure 3 is a diagram of a stack-based automaton according to the invention,
- Figure 4 is a schematic illustrating the alternative symbols at the start of the analysis of an exemplary permutation, in accordance with the invention,
- Figure 5 is a schematic illustrating the alternative symbols of the example of Figure 4 at a later step, in accordance with the invention,
- Figure 6 is a schematic illustrating the alternative symbols in the case of the expression of a permutation with the aid of prior art rules,
- Figure 7a is a tree illustrating the set of alternatives at the nodes resulting from the exemplary permutation, in accordance with the invention, and
- Figure 7b is a tree illustrating the set of alternatives at the nodes resulting from the exemplary permutation, according to the prior art.

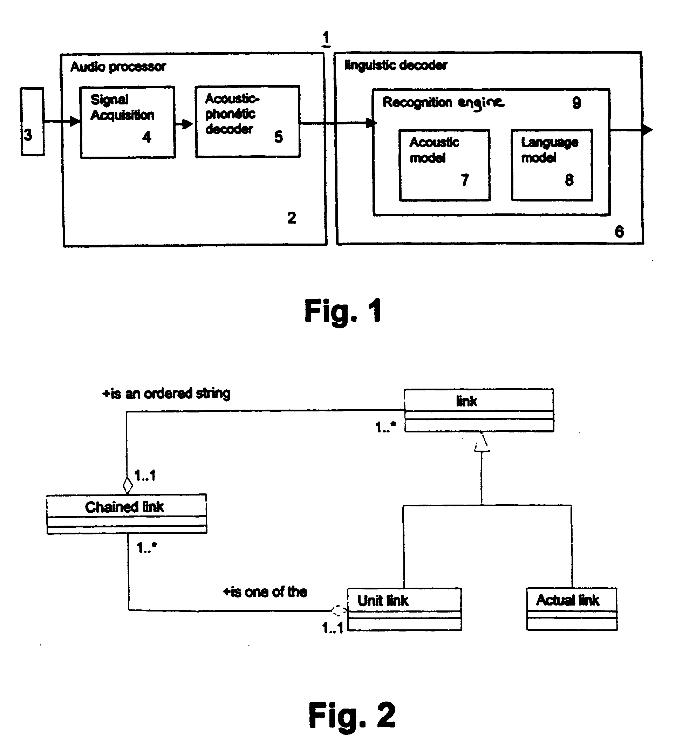

Figure 1 is a block diagram of an exemplary device 1 for speech recognition. This device includes a processor 2 of the audio signal carrying out the digitisation of an audio signal originating from a microphone 3 by way of a signal acquisition circuit 4. The processor also translates the digital samples into acoustic symbols chosen from a predetermined alphabet. For this purpose it includes an acoustic-phonetic decoder 5. A linguistic decoder 6 processes these symbols so as to determine, for a sequence A of symbols, the most probable sequence W of words, given the sequence A.

The linguistic decoder uses an acoustic model 7 and a language model 8 implemented by a hypothesis-based search algorithm 9. The acoustic model is for example a so-called "hidden Markov" model (or HMM). The language model implemented in the present exemplary embodiment is based on a grammar described with the aid of syntax rules of the Backus Naur form. The language model is used to submit hypotheses to the search algorithm. The latter, which is the recognition engine proper, is, as regards the present example, a search algorithm based on a Viterbi type algorithm and referred to as "n-best". The n-best type algorithm determines at each step of the analysis of a sentence the n most probable sequences of words. At the end of the sentence, the most probable solution is chosen from among the n candidates.

The concepts in the above paragraph are in themselves well known to the person skilled in the art, but information relating in particular to the n-best algorithm is given in the work:

"Statistical methods for speech recognition" by F. Jelinek, MIT Press 1999 ISBN 0-262-10066-5 pp. 79-84. Other algorithms may also be implemented. In particular, other algorithms of the "Beam Search" type, of which the "n-best" algorithm is one example.

The acoustic-phonetic decoder and the linguistic decoder can be embodied by way of appropriate software executed by a microprocessor having access to a memory containing the algorithm of the recognition engine and the acoustic and language models.

The invention also relates to the language model, as well as to its use by the recognition engine.

The following four syntactic rules are customarily used to define a language model probabilistic grammar.

These four rules are:
(a) "Or" symbol
   <symbol A> = <symbol B> | <symbol C>
(b) "And" symbol (concatenation)
   <symbol A> = <symbol B> <symbol C>
(c) Optional element
   <symbol A> = <symbol B>? (optional index)
(d) Lexical assignment
   <symbol A> = "lexical word"
   It should be noted that only rules (a), (b) and (d) are actually obligatory. Rule (c) can be reproduced with the aid of the other three, although to the detriment of the compactness of the language model.
   The language model in accordance with the present exemplary embodiment uses an additional syntactic rule to define the probabilistic grammar of the language model:
(e) "Permutation" symbol
   <symbol A> = Permut. {<symbol A1>, <symbol A2>, ..., <symbol An>}
   (<symbol Ai> > <symbol Aj>
   , ...,
   <symbol Ak> > <symbol Al>)

This signifies that the symbol A is any one of the repetitionless permutations of the n symbols A1, ... An, these symbols being adjoined by the "and" rule for each permutation.

Moreover, according to the present exemplary embodiment, only the permutations which satisfy the constraints expressed between brackets and which are read: "the symbol Ai appears in the permutation before the symbol Aj, the symbol Ak appears before the symbol Al", are syntactically valid.

The optional index present in the definition of rule (c) operates as follows:

An optional index is a pair formed of an integer and of a Boolean, which can be true or false.

When a rewrite rule of the type:
<symbol A> = <symbol B>? (optional index)
is encountered, then:
- If the same integer as that of the present optional index has never been encountered in the optional indices of other rules which have produced the current state in the grammar of the language model, for the hypothesis currently under investigation, then the symbol A can:
   - be swapped for the symbol B and the optional index activated;
   - be swapped into the empty rule and the optional index not activated.
- If the same index has been activated by applying a rule of the same type according to the protocol described above, then the only valid expression of the rule is
   - to swap the symbol A for the symbol B if the boolean index is true;
   - to swap the symbol A for the empty symbol if the boolean index is false.

The permutations could be expressed in a context-independent BNF type language, by simply extending the syntactic tree represented by the fifth rule, this extension being achieved solely by employing the first four. For combinatorial reasons, the syntactic tree obtained will be of large size, as soon as the number of permuted symbols increases.

The processing of the permutations is achieved by virtue of a stack-based automaton, hence one which is context dependent, and which marks whether, in the course of the syntactic search, an occurrence of the group participating in the permutation has already been encountered, correctly in relation to the order constraints.

The standard processing of a BNF grammar is achieved by virtue of the objects illustrated by Figure 2.

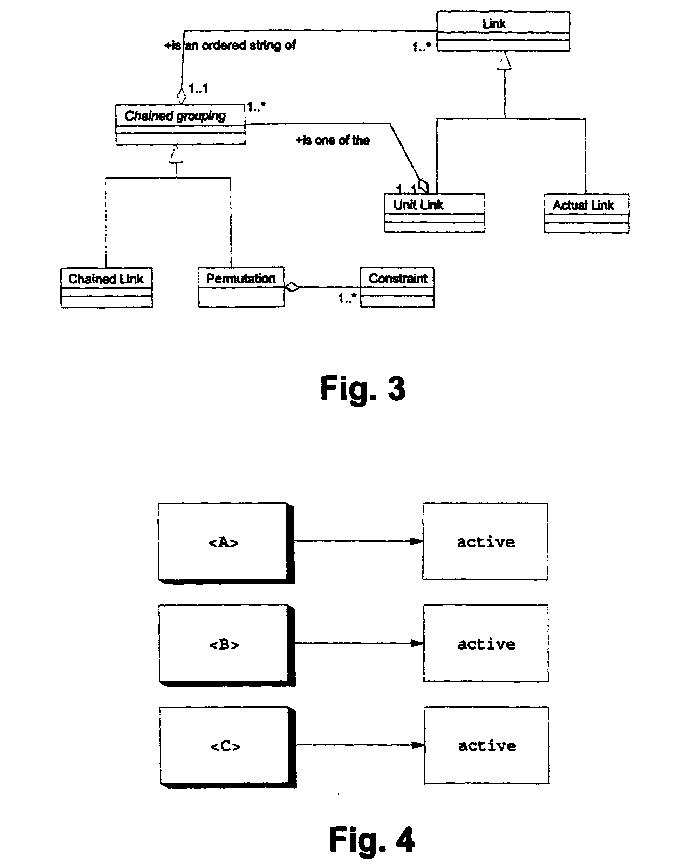

The exemplary embodiment relies on the other hand on a stack-based automaton which uses the new objects illustrated by Figure 3.

To describe the implementation of syntax rule (e), we shall take the example of a simple sentence, composed of a single permutation of three syntactic terms, with no constraints:
<Sentence> = Permut {<A>,<B>,<C>}

The terms A, B and C may themselves be complex terms defined with one or more permutation symbols and/or other symbols.

A speech recognition system based on the conventional principles of description of grammars, that is to say using the simple BNF syntax, will translate this form of sentence in the following manner:
<Sentence>=
   <A><B><C>|
   <A><C><B>|
   <B><A><C>|
   <C><A><B>|
   <B><C><A>|
   <C><B><A>.

There are 3! combinations, connected by the "or" symbol (|). The syntactic tree is completely unfurled, and the information that this tree is in fact the representation of a permutation is lost. The tree described is stored entirely in memory to represent the language model required for speech recognition.

This structure is used to propose candidate terms to be analysed in the course of the "n-best search" algorithm of the recognition engine, which terms will be concatenated to form syntax-compliant sentences from which the engine will retain the n best, that is to say those which exhibit the highest likelihood scores given the sound signal recorded.

The "n-best search" algorithm is coupled with a strategy for pruning the branches of the syntactic tree which, in the course of the left-to-right analysis of the sentence, retains only the n best candidate segments up to the current analysis point.

It may be seen that when investigating the sentence in question, on commencing the analysis, six alternatives will be presented to the acoustic decoding engine, one for each of the combinations of the three terms <A>, <B> and <C>. The fact that it is possible to distinguish from left to right three subgroups of two combinations (one beginning with the symbol <A>, the second with the symbol <B>, and the last with the symbol <C>) is lost and the engine will analyse each of the six structures in an undifferentiated manner. If it turns out that the syntactic structures <A>, <B> and <C> are sufficiently complex for pruning to occur in the course of the analysis of these structures, then the n best segments analysed will in fact be composed of pairs of structures which are perfectly identical, and hence only n-best/2 alternatives will actually have been taken into account.

The novel processing proposed by the invention does not suffer from this reduction in the search space: the information that a permutation exists in the grammar is indicated explicitly and the permutation is processed as is.

In what follows, the behaviour of the recognition engine will be described firstly in detail in the case of the implementation of rule (e) for describing a permutation, then we shall concentrate on describing the behaviour of the recognition engine in the case where the permutations are expressed with the aid of rules (a) to (d). The abovementioned advantages afforded by the invention will emerge from comparing the two behaviours.

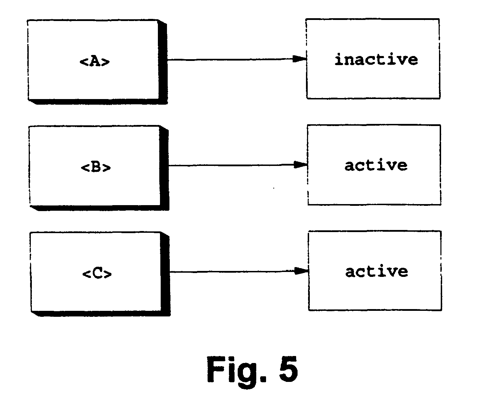

Figures 4 and 5 are diagrams illustrating the behaviour of the recognition engine when it is presented with a permutation in accordance with the invention.

On commencing the analysis of the permutation, step illustrated by Figure 3, three possibilities are presented to the recognition engine for the choice of the first term of the sentence: the symbol <A>, the symbol <B> and the symbol <C>.
An "n-best" analysis with pruning is applied to these structures. The engine firstly considers the symbol <A>. The path which explores route <A> is negotiated in the left/right analysis as follows:

As it is the path starting with <A> which is analysed, a logic symbol in memory preserves this information by setting a variable assigned to the permutation in question and to the alternative currently being investigated. This variable, managed by the engine, specifies that this symbol <A> is no longer active for the rest of the analysis of the present path, that is to say it will no longer be available as a candidate symbol for a term situated further away along the same path.

More precisely, the situation at the start of the analysis is that illustrated by Figure 4: the three symbols <A>, <B>, <C> are active and candidates for the n-best recognition algorithm.

In the course of the search, each of the alternatives is explored. For example, for the first, the symbol <A> is envisaged. In the course of this exploration, it will be necessary to explore the possible symbol strings beginning with <A>: from the standpoint of the analysis of the second term of the sentence, the situation illustrated by Figure 5 will obtain: the symbol <A> is no longer available for the analysis of the rest of the sentence, for the alternative currently envisaged since it has been used up previously in the left/right analysis of the recorded signal flow.

Hence, two candidate symbols remain, <B> and <C>. In analogous manner, the search route which will analyse for example <B> will mark this symbol as inactive and only the symbol <C> will remain available for the rest of the decoding.

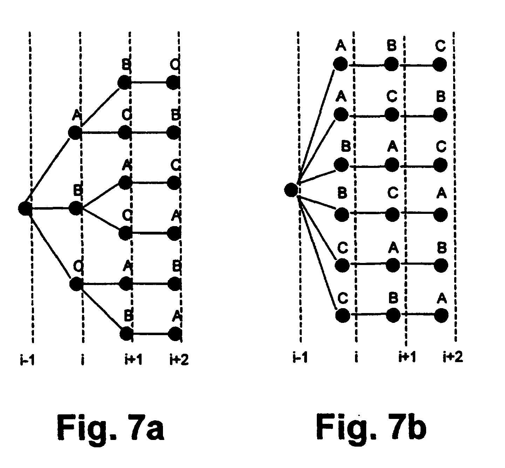

Stated otherwise, the recognition engine according to the invention processes a permutation as defined by rule (e) in the manner illustrated by Figure 7a. It is considered that the engine considers the term of rank i of the sentence to be analysed. The engine determines the set of possible alternative symbols: in the case of the exemplary permutation with three symbols, there are three possible alternatives at level i: <A>, <B>, <C>. At rank i+1, there are now only two alternatives, the previous symbol chosen at rank i no longer being considered by the engine. At rank i+2, no choice is now possible.

From the point of view of considering the n best paths, it would appear that the reduction in the number of possible alternatives at the level of certain nodes of the tree of Figure 7a avoids the consideration of partially redundant paths.

The operation of a conventional speech recognition algorithm, which does not use the mechanism of our invention, can likewise be represented.

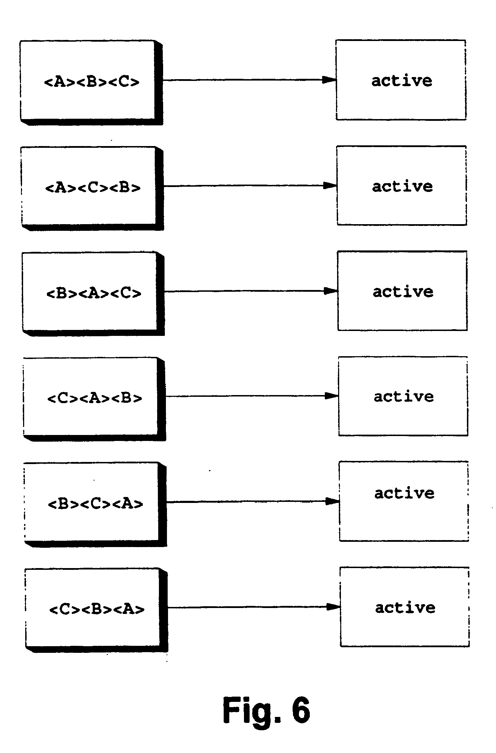

On commencing the decoding, the situation is that of Figure 6: it may be seen that on commencing the analysis of the sentence, the recognition engine thinks that it is faced with six possibilities. The first two both begin with the symbol <A>, and their processing will be exactly identical, until the appearance of the actual alternative pertaining to the second term.

Thus, up to this point, the storage space used in the n-best algorithm to preserve the most promising tracks will contain each search hypothesis twice.

If moreover the group <A> is fairly complex and pruning occurs before the appearance of the differentiating terms which follow <A>, then the "n-best-search" algorithm will in fact carry out only an "n/2 best-search", each route analysed being duplicated.

The example given pertains to a permutation with three terms. For a permutation with four or more terms, the same remarks apply with even more injurious effects to the recognition algorithm. The perplexity seen by the recognition engine is much greater than the actual perplexity of the language model.

Figure 7b illustrates the prior art processing: six alternatives exist at rank i, instead of three.

This example shows that our invention affords two major advantages as compared with the traditional method, even though it does not increase the expressivity of the language model:

Instead of storing syntactic trees describing a permutation, which may use up a lot of memory, one stores only the terms appearing in the permutation, plus variables of simple type which mark the possible activation of the syntactic group in the course of the n-best analysis of the recognition engine.

The BNF grammar-based syntactic processing of the permutations is not suited to the n-best search algorithm imposed by the acoustic part of the speech recognition processing: one and the same analysis hypothesis is considered several times, and the n-best is most often merely an n/m-best, m depending on the number of terms involved in the permutation.

The novel language model presented is intended for large vocabulary man machine voice dialogue applications, for highly inflected languages or for spontaneous speech recognition.

The language based on the rules above is not more expressive or more powerful than a BNF type language expressed with the aid of conventional rules, when the set of grammatical sentences is finite. The benefit of the invention does not therefore pertain to the expressivity of the novel language, but to the advantages at the level of the processing, by the algorithm of the speech recognition engine, of the syntactic rules. Less memory is required for the processing.

Moreover, the novel syntactic rule allows greater ease of writing the grammar.

Since the process relies on a stack-based automaton, it is particularly suitable, unlike the current solutions, for low-cost built-in applications such as applications in mass-market electronic appliances.

## Claims

1. Speech recognition device including an audio processor (2) for the acquisition of an audio signal and a linguistic decoder (6) for determining a sequence of words corresponding to the audio signal,
**characterised in that**
the linguistic decoder (6) includes a recognition engine (9) and a language model (8) defined with the aid of a grammar comprising a syntactic rule for repetitionless permuting of symbols, the recognition engine managing an information associated with each symbol of the permutation allowing each symbol to be parsed only once, the recognition engine (9) implementing an algorithm of the "beam search" or "n-best" type providing n best results, the most probable solution being chosen from among these best results.

2. Device according to Claim 1, **characterised in that** the syntactic rule for permuting symbols includes a list of symbols and as appropriate expressions of constraints on the order of the symbols.

3. Device according to one of Claims 1 or 2, **characterised in that**, upon the assigning of symbols of a permutation to a string of terms of a sentence, the recognition engine (9) chooses a symbol to be assigned to a given term solely from among the symbols of the permutation which have not previously been assigned.

4. Device according to one of Claims 1 to 3, **characterized in that** each element of the sentence is associated with a probability value, the linguistic decoder (6) running with a pruning strategy which retains only the best candidate sentence.

## Patentansprüche

1. Spracherkennungsgerät mit einem Audioprozessor (2) für die Erfassung eines Audiosignals und einem Linguistikdecoder (6) für die zur Bestimmung einer dem Audiosignal entsprechenden Folge von Wörtern,
**dadurch gekennzeichnet, dass**
der Linguistikdecoder (6) ein Erkennungsgerät (9) und ein Sprachmodel (8) enthält, das durch eine Grammatik mit einer Syntaxregel für die wiederholungslose Änderung von Symbolen ermittelt wird, wobei das Erkennungsgerät Informationen verwaltet, die jedem Symbol der Permutation zugeordnet sind, und die eine Analyse jedes Symbols nur einmal ermöglicht, dass das Erkennungsgerät (9) einen Algorithmus des "beam search"- oder "n-best"-Typs durch Lieferung von n besten Ergebnissen durchführt und die wahrscheinlichste Lösung unter diesen besten Ergebnissen gewählt wird.

2. Gerät nach Anspruch 1, **dadurch gekennzeichnet, dass** die Syntaxregel zur Permutation von Symbolen eine Liste von Symbolen und als geeignete Ausdrücke für die Beschränkungen in der Ordnung der Symbole enthält.

3. Gerät nach einem der Ansprüche 1 oder 2, **dadurch gekennzeichnet, dass** bei der Zuordnung von Symbolen einer Permutation zu einer Reihe von Ausdrücken eines Satzes das Erkennungsgerät (9) ein Symbol auswählt für die Zuordnung zu einem bestimmten Ausdruck nur unter den Symbolen der Permutation, die nicht vorher zugeordnet worden sind.

4. Gerät nach einem der Ansprüche 1 bis 3, **dadurch gekennzeichnet, dass** jedes Element des Satzes einem Wahrscheinlichkeitswert zugeordnet wird, und der Linguistikdecoder (6) mit einer Pruning-Strategie läuft, die nur den besten Hilfssatz zurückbehält.

## Revendications

1. Dispositif de reconnaissance vocale comprenant un processeur audio (2) pour l'acquisition d'un signal audio et un décodeur linguistique (6) pour déterminer une séquence de mots correspondant au signal audio,
**caractérisé en ce que**
le décodeur linguistique (6) inclut un moteur de reconnaissance (9) et un modèle de langage (8) défini à l'aide d'une grammaire comprenant une règle syntaxique pour la permutation sans répétition de symboles, le moteur de reconnaissance vocale gérant les informations associées à chaque symbole de la permutation, permettant à chaque symbole d'être analysé une seule fois, le moteur de reconnaissance (9) appliquant un algorithme du type "recherche en faisceau" ou "n-best" fournissant les n meilleurs résultats, la solution la plus probable étant choisie parmi ces meilleurs résultats.

2. Dispositif selon la revendication 1, **caractérisé en ce que** la règle syntaxique pour la permutation des symboles inclut une liste de symboles et, le cas échéant, des expressions de contraintes d'ordre des symboles.

3. Dispositif selon l'une des revendications 1 ou 2, **caractérisé en ce que**, lors de l'attribution des symboles d'une permutation à une chaîne de termes d'une phrase, le moteur de reconnaissance (9) choisit un symbole à attribuer à un terme donné uniquement parmi les symboles de la permutation qui n'ont pas été précédemment attribués.

4. Dispositif selon l'une des revendications 1 à 3, **caractérisé en ce que** chaque élément de la phrase est associé à une valeur de probabilité, le décodeur linguistique (6) s'exécutant avec une stratégie d'élagage qui retient uniquement la meilleure phrase.
